# EUROPÄISCHE PATENTSCHRIFT

(11) **EP 1 426 644 B1**
(45) Veröffentlichungstag und Bekanntmachung des Hinweises auf die Patenterteilung: **09.08.2006**
(21) Anmeldenummer: 03022583.3
(22) Anmeldetag: 02.10.2003
(51) Int. Cl.: F16D 65/12

(54) **Verbundbremsscheibe für eine Fahrzeug-Scheibenbremse**
Assembled brake disc for a vehicle disc brake
Disque de frein assemblé pour frein à disque de véhicule

(30) Priorität: 16.11.2002 DE 10253451
(43) Veröffentlichungstag der Anmeldung: 09.06.2004
(73) Patentinhaber: Bayerische Motoren Werke Aktiengesellschaft, 80809 München (DE)
(72) Erfinder: Schubert, Christian, 81677 München (DE); Maier, Ernst, 85570 Markt Schwaben (DE); Heidenthaler, Martin, 83417 Kirchanschöring (DE)

(56) Entgegenhaltungen:
- EP-A- 0 077 137
- EP-A- 0 512 853
- DE-A- 3 823 146

## Beschreibung

Die Erfindung betrifft eine Verbundbremsscheibe für eine Fahrzeug-Scheibenbremse, deren aus einem ersten Material bestehender Reibring oder Reibring-Paar abseits der Ebene des Reibringes oder Reibringpaares mit einem aus einem anderen Material bestehenden Bremsscheibentopf verbunden ist, wozu ein vom Reibring in Axialrichtung abragender Reibringstummel als erstes Verbindungselement vorgesehen ist, der/das formschlüssig mit der als zweites Verbindungselement fungierenden Topfwand des Bremsscheibentopfes verbunden ist und wobei ohne Verwendung eines weiteren Bauelementes diese formschlüssige Verbindung durch eine oder mehrere Aussparungen in einem der beiden Verbindungselemente gebildet ist, in die jeweils ein am anderen Verbindungselement vorgesehener Vorsprung hineinragt. Zum technischen Umfeld wird neben der DE 44 19 757 A1, der DE 100 32 972 A1 und der DE 38 23 146 A1 auf die US 6357 557 B1 verwiesen.

Es besteht die Tendenz, Fahrzeugbremsscheiben zu entwickeln, deren Reibring(e) aus einem anderen Werkstoff besteht bzw. bestehen als der sog. Bremsscheibentopf, mit dem der bzw. die Reibring(e) am Radträger des Fzg.'s oder dgl. befestigt wird/werden, da auf diese Weise jeweils ein für die spezifischen Anforderungen günstiges Material gewählt werden kann. Beispielsweise können Reibringe aus einem hinsichtlich der Reibeigenschaften bewährten Grauguss-Material im Hinblick auf eine Gewichtsreduzierung mit einem Bremsscheibentopf aus einer geeigneten Aluminiumlegierung kombiniert werden. Dabei gilt es jedoch, den bzw. die Reibring(e) geeignet am Bremsscheibentopf zu befestigen, wobei naturgemäß besonders große Kräfte oder Momente in Umfangsrichtung der Bremsscheibe übertragen werden müssen. Zu berücksichtigen sind dabei aber auch die unterschiedlichen Wärmedehnungen des Reibrings einerseits und des Bremsscheibentopfes andererseits, die sich bei einer unvermeidbaren Erwärmung der Bremsscheibe während deren Betriebs einstellen, und die zu unzulässig hohen Wärmespannungen führen können.

In der eingangs zweitgenannten Schrift ist ausgeführt, dass im Hinblick auf diese genannten Anforderungen eine Fügestelle, die abseits der Reibringebene bzw. abseits des Ringbereichs des bzw. der Reibringe(s) liegt, besonders vorteilhaft ist. Vorteilhaft ist eine derart platzierte Fügestelle, die sich mittels eines in diesem bekannten Stand der Technik sog. kreiszylindrischen, sich in Axialrichtung erstreckenden Fortsatzes des Reibringes umsetzen lässt, ferner wegen der guten Zugänglichkeit, d.h. die Verbindung zwischen dem sog. kreiszylindrischen Reibring-Fortsatz und dem Bremsscheibentopf kann relativ einfach hergestellt werden. In der vorliegenden Erfindungsbeschreibung wird dabei dieser genannte Fortsatz der besseren Verständlichkeit wegen als "Reibringstummel" bezeichnet.

Die Fügestelle zwischen dem sog. Reibringstummel und dem Bremsscheibentopf ist in der eingangs zweitgenannten DE 100 32 972 A1 als Press- oder Schrumpfsitz ausgebildet und durch eine Vielzahl von Nieten gesichert, wohl um die Übertragbarkeit relativ hoher Drehmomente zu gewährleisten. Die Herstellung dieser Nietverbindungen ist jedoch relativ aufwändig. Demgegenüber vorteilhafter erscheint eine in der eingangs erstgenannten DE 44 19 757 A1 unter Figur 6 dargestellte Bremsscheibe, bei welcher der Reibring ebenfalls mit einem umlaufenden, in Axialrichtung abstehenden dort sog. Kragen versehen ist, der an der Topfwand des Bremsscheibentopfes anliegt. Dabei sind in der Topfwand Ausprägungen vorgesehen, die formschlüssig in zugehörige Ausprägungen des Kragens eingreifen. Diese Ausprägungen werden dabei durch einen einfachen, radial nach außen gerichteten Prägevorgang in die Topfwand und in den Kragen eingeformt, was es jedoch relativ fraglich erscheinen lässt, ob an einer derartigen Bremsscheibe tatsächlich unter allen Umständen, d.h. insbesondere auch unter Berücksichtigung unterschiedlicher Wärmedehnungen von Reibring und Bremsscheibentopf, ein an den Reibring angelegtes Bremsmoment sicher auf den Bremsscheibentopf übertragen werden kann. Die DE 38 23 146 A1 zeigt ebenfalls eine Verbundbremsscheibe , wobei der Reibring und der Bremsscheibentopf durch Hartlöten verbunden sind, was fertigungstechnisch relativ aufwändig ist.

Die US 6357 557 B1 zeigt den Oberbegriff des Anspruchs 1.

Eine im Hinblick auf die Nachteile des bekannten Standes der Technik verbesserte Bremsscheibe nach dem Oberbegriff des Anspruchs 1 aufzuzeigen, ist Aufgabe der vorliegenden Erfindung.
Die Lösung dieser Aufgabe ist dadurch gekennzeichnet, dass die Vorsprünge unter Hinterschnitt in die Aussparungen hineinragen und dass die formschlüssige Verbindung gießtechnisch oder durch plastische Verformung hergestellt ist. Vorteilhafte Weiterbildungen sind Inhalt der Unteransprüche.

Aussparungen, in die entsprechend angepasste Vorsprünge hineinragen, stellen eine erheblich sicherere formschlüssige Verbindung her als einfache (aus dem Stand der Technik bekannte) Ausprägungen. Insbesondere kann über derartige in Aussparungen hineinragende Vorsprünge unter allen Umständen das geforderte Drehmoment übertragen werden, also auch dann, wenn aufgrund unterschiedlicher Wärmedehnungen ggf. geringe Relativbewegungen (insbesondere in Radialrichtung der Bremsscheibe) zwischen den beiden sog. Verbindungselementen, nämlich dem sog. Reibringstummel einerseits und der Wand des Bremsscheibentopfes andererseits, stattfinden sollten. Besonders sicher ist die erfindungsgemäße formschlüssige Verbindung dadurch, dass die Vorsprünge unter Hinterschnitt in die Aussparungen hineinragen.

Eine erfindungsgemäße formschlüssige Verbindung ist dabei durch plastische Verformung herstellbar, wobei bevorzugt ein besagter Vorsprung in die zugeordnete Aussparung quasi hineingetrieben werden kann. Alternativ ist die formschlüssige Verbindung jedoch auch gießtechnisch herstellbar, wobei bevorzugt der Reibringstummel mit der Topfwand quasi umgossen wird, d.h. dass der Bremsscheibentopf als Gussteil ausgebildet und an den Reibring bzw. Reibringstummel angegossen wird.

Im weiteren wird die vorliegende Erfindung anhand mehrerer Ausführungsbeispiele weiter erläutert, wobei in einigen Figuren eine erfindungsgemäße Bremsscheibe in 3-D-Darstellung gezeigt ist, in den meisten Figuren jedoch ein Teil eines Radial-Schnittes durch eine erfindungsgemäße Bremsscheibe gezeigt ist, wobei die Drehachse der Bremsscheibe in der Schnittebene liegt.

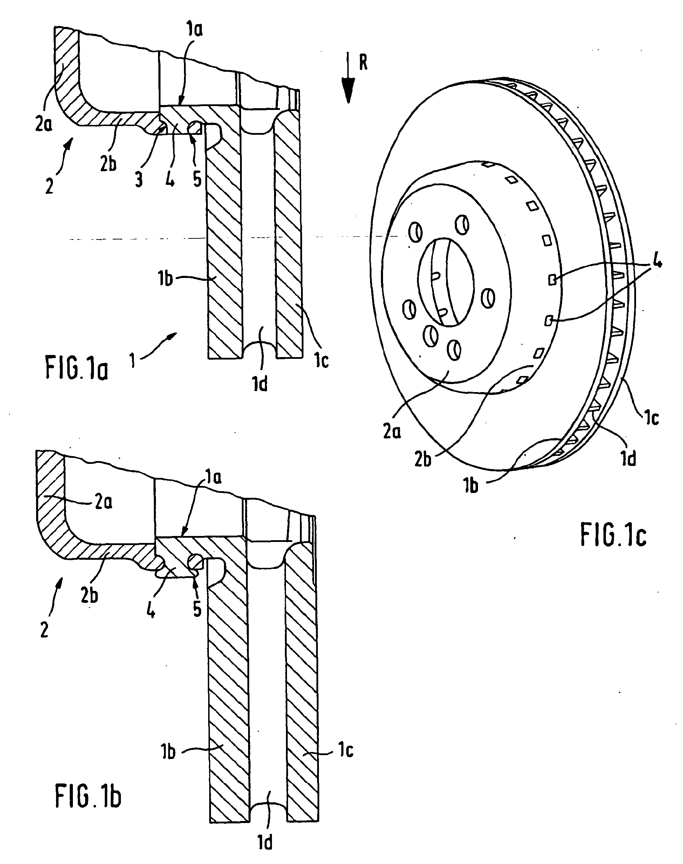

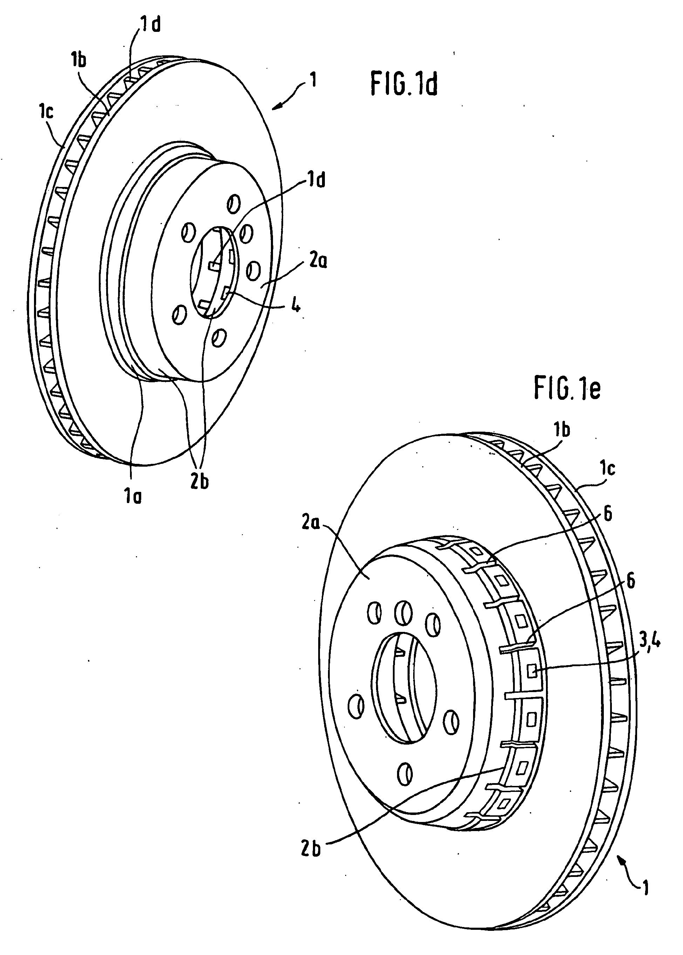

Im Detail zeigt
- Fig. 1a: eine Ausführungsform mit radial nach außen gerichteten Vorsprüngen des Reibringstummels im Schnitt, wobei die Topfwand außerhalb des Reibringstummels liegt,
- Fig. 1 b: eine Ausführungsform ähnlich Fig. 1a mit außen liegendem Überstand der Vorsprünge,
- Fig. 1 c: eine 3-D-Darstellung des Ausführungsbeispiels nach Fig. 2a,
- Fig. 1d: eine Ausführungsform mit radial nach innen gerichteten Vorsprüngen des Reibringstummels in 3-D-Darstellung, wobei die Topfwand innerhalb des Reibringstummels liegt,
- Fig. 1e: eine Ausführungsform ähnlich Fig. 1c mit Durchbrechungen in der Topfwand,
- Fig. 2a: eine Ausführungsform mit radial nach innen gerichteten Vorsprüngen der Topfwand im Schnitt, wobei die Topfwand außerhalb des Reibringstummels liegt,
- Fig. 2b: eine Ausführungsform ähnlich Fig. 2a mit innen liegendem Überstand der Vorsprünge,
- Fig. 2c: eine 3-D-Darstellung des Ausführungsbeispiels nach Fig. 2a,
- Fig. 3: eine Ausführungsform ähnlich den Fig. 2a - 2c im Schnitt, wobei die Topfwand den Reibringstummel innenseitig und außenseitig umschließt,
- Fig. 4: eine Ausführungsform ähnlich den Fig. 1a - 1c im Schnitt, wobei der Reibringstummel die Topfwand innenseitig und außenseitig umschließt,
- Fig. 5: eine Ausführungsform (im Schnitt), bei der die Aussparung zur Aufnahme des Vorsprungs als umlaufende Rille ausgebildet ist,
- Fig. 6: eine Ausführungsform ähnlich den Fig. 2a, 2c im Schnitt, wobei die Vorsprünge die Aussparungen und letztere die Bauteilwand nicht durchdringen und wobei die Aussparungen im Reibringstummel vorgesehen sind,
- Fig. 7: eine Ausführungsform ähnlich den Fig. 1 a, 1 c im Schnitt, wobei die Vorsprünge die Aussparungen und letztere die Bauteilwand nicht durchdringen und wobei die Aussparungen in der Topfwand vorgesehen sind,
- Fig. 8: eine Ausführungsform in 3-D-Darstellung mit in Axialrichtung ausgerichteten Vorsprüngen und Aussparungen, sowie
- Fig. 9: eine Ausführungsform, bei der die Aussparungen als umlaufende Rinne und zusätzlich als axial verlaufende Nuten im Reibringstummel ausgebildet sind, wobei nur die Reibringe und der Reibringstummels in 3-D-Darstellung gezeigt sind.

Dabei sind in sämtlichen Figuren gleiche Elemente mit den gleichen Bezugsziffern bezeichnet.

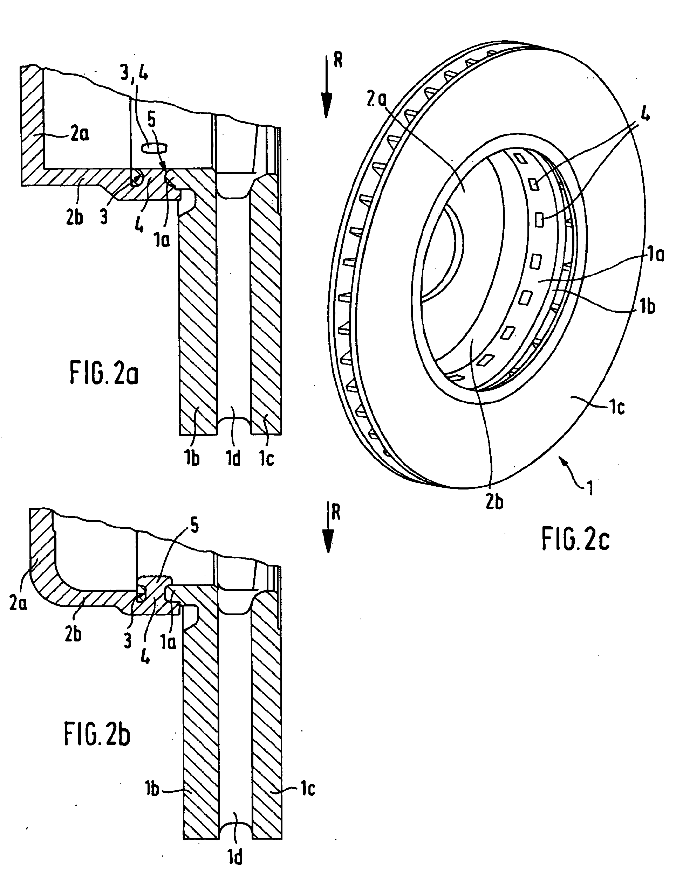

Eine erfindungsgemäße Bremsscheibe besteht wie üblich aus einem Reibring 1 sowie einem Bremsscheibentopf 2. Letzterer weist wie üblich ein Bodenteil 2a sowie eine konzentrisch zur Bremsscheiben-Drehachse umlaufende Topfwand 2b auf. Hier handelt es sich um eine belüftete Bremsscheibe, so dass neben einem äußeren Reibring 1b ein innerer Reibring 1c vorgesehen ist, zwischen denen wie üblich Kühlkanalstege 1d verlaufen (vgl. hierzu auch die **Figuren 1c, 2c**).

Vom äußeren Reibring 1b der Bremsscheibe ragt ein sog. Reibringstummel 1 a in Axialrichtung der Bremsscheibe ab, bei welchem es sich um einen ringförmigen Fortsatz oder Kragen handelt, der - ebenso wie die Topfwand 2b - eine konzentrisch zur Bremsscheiben-Drehachse umlaufende Wand darstellt, die am Reibring 1b befestigt bzw. angeformt ist. Nachdem erfindungsgemäß über diesen Reibringstummel 1a der Reibring 1 bzw. 1b mit dem Bremsscheibentopf 2 formschlüssig verbunden ist, stellt dieser Reibringstummel 1a das erste Verbindungselement dar, für welches im weiteren ebenfalls die Bezugsziffer 1a verwendet wird. Das weitere Element dieser Verbindung, d.h. das zweite Verbindungselement wird durch die Topfwand 2b gebildet, wobei im weiteren für das zweite Verbindungselement ebenfalls die Bezugsziffer 2b verwendet wird. Weitere eigenständige Bauelemente werden für die Verbindung zwischen dem Reibring 1 und dem Bremsscheibentopf 2 nicht benötigt.

Um jedoch den gewünschten Formschluss zwischen dem ersten Verbindungselement 1a und dem zweiten Verbindungselement 2b herzustellen, sind noch besondere Maßnahmen erforderlich, die darin bestehen, dass in einem der beiden Verbindungselemente 1a bzw. 2b eine oder mehrere Aussparung(en) 3 vorgesehen ist bzw. sind, wobei in jede Aussparung 3 ein sog. Vorsprung 4 hineinragt oder eingreift, der am anderen Verbindungselement 2b bzw. 1a vorgesehen ist. Bei den Aussparungen 3 kann es sich dabei entweder um sog. Taschen handeln, die also einen Boden besitzen, oder aber um Durchbrüche, die die Wand eines der Verbindungselemente 1a oder 2b vollständig durchdringen.

Beim Ausführungsbeispiel nach **Figur 1a** (Fig. 1c zeigt dieses Beispiel in 3-D-Darstellung) bzw. **Figur 1b** durchdringen mehrere über dem Außen-Umfang der Reibringstummels 1a verteilt angeordnete Vorsprünge 4 die jeweils zugeordneten als Durchbrüche ausgebildeten Aussparungen 3 in der Topfwand 2b. Wie ersichtlich ist dabei ein in Radialrichtung R wirksamer Hinterschnitt 5 vorgesehen, der bspw. auf gießtechnischem Weg hergestellt werden kann, derart, dass die Topfwand 2b quasi die Vorsprünge 4 umschließt. Die Vorsprünge 4 ihrerseits können dabei am Reibringstummel 1a angegossen oder mechanisch aus diesem herausgearbeitet sein.

Die Topfwand 2b liegt dabei in Radialrichtung R weiter außen als der Reibringstummel 1a, der mit seinem Außen-Umfang auf dem Innen-Umfang der Topfwand 2b aufliegt. Dabei ist die Topfwand 2b in diesem sog. Kontaktbereich oder Verbindungsbereich, in dem die Durchbrüche bzw. Aussparungen 3 vorgesehen sind, dünner ausgebildet (dies muß jedoch nicht sein) als in einem näher am Bodenteil 2a liegenden Abschnitt, in dem kein Kontakt mit dem Reibringstummel 1a besteht, was so (auch mit den Vorteilen) grundsätzlich aus der bereits genannten DE 100 32 972 A1 bekannt ist.

Bei der Variante nach **Fig.1b** ist ein in Radialrichtung R außen liegender Überstand über dem Außen-Umfang der Topfwand 2b noch vorhanden, der bei der Variante nach **Fig.1a** entfernt ist bzw. dort überhaupt nicht gebildet wurde, jedoch ist auch bei der Variante nach **Fig.1a** ein geringfügiger Hinterschnitt 5 vorgesehen, der verhindert, dass sich der Vorsprung 4 gegen Radialrichtung R auch nur geringfügig aus der Aussparung 3 hinaus bewegt.

Eine im Prinzip gleiche Verbindung kann bei der Variante nach **Fig.1d** realisiert sein, die jedoch in dieser 3-D-Darstellung nicht sichtbar ist, da hier die Topfwand 2b in Radialrichtung R betrachtet innerhalb des Reibringstummels 1a liegt, d.h. der Reibringstummel 1a umgreift hier die Topfwand 2b.

Noch eine weitere Variante ist in **Fig.1e** dargestellt, die so grundsätzlich auch bei allen weiteren Ausführungsbeispielen umgesetzt sein kann. Wie diese 3-D-Darstellung einer erfindungsgemäßen Bremsscheibe zeigt, sind in der Topfwand 2b weitere Schwächungen oder Durchbrechungen 6 abseits der formschlüssigen Verbindungen vorgesehen, die hier als Schlitze zwischen den Aussparungen 3 ausgebildet sind. Auch diese Gestaltung ist mit ihren Vorteilen grundsätzlich aus der bereits mehrfach genannten DE 100 32 972 A1 bekannt.

Ein anderes (ähnliches) Ausführungsbeispiel ist in **Figur 2a** (Fig. 2c zeigt dieses Beispiel in 3-D-Darstellung) bzw. **Figur 2b** dargestellt, wonach mehrere über dem Innen-Umfang der Topfwand 2b verteilt angeordnete Vorsprünge 4 die jeweils zugeordneten als Durchbrüche ausgebildeten Aussparungen 3 im Reibringstummel 1a durchdringen. Wie ersichtlich ist auch dabei ein in Radialrichtung R wirksamer Hinterschnitt 5 vorgesehen, der bspw. auf gießtechnischem Weg hergestellt werden kann, derart, dass die der Reibringstummel 1a quasi die Vorsprünge 4 umschließt.

Die Aussparungen 3 können bei dieser Variante in den Reibringstummel 1a eingegossen oder mechanisch in diesen eingearbeitet sein. Bei der Variante nach **Fig.2b** ist im übrigen ein in Radialrichtung R innen liegender Überstand über den Innen-Umfang des Reibringstummels 1a noch vorhanden, der bei der Variante nach **Fig.2a** entfernt ist bzw. dort überhaupt nicht gebildet wurde, jedoch ist auch bei der Variante nach **Fig.2a** ein geringfügiger Hinterschnitt 5 vorgesehen, der verhindert, dass sich der Vorsprung 4 in Radialrichtung R auch nur geringfügig aus der Aussparung 3 hinaus bewegt. Selbstverständlich ist auch hier eine weitere Variante entsprechend **Fig.1d** möglich, wonach die Topfwand 2b in Radialrichtung R betrachtet innerhalb des Reibringstummels 1a an diesem anliegt.

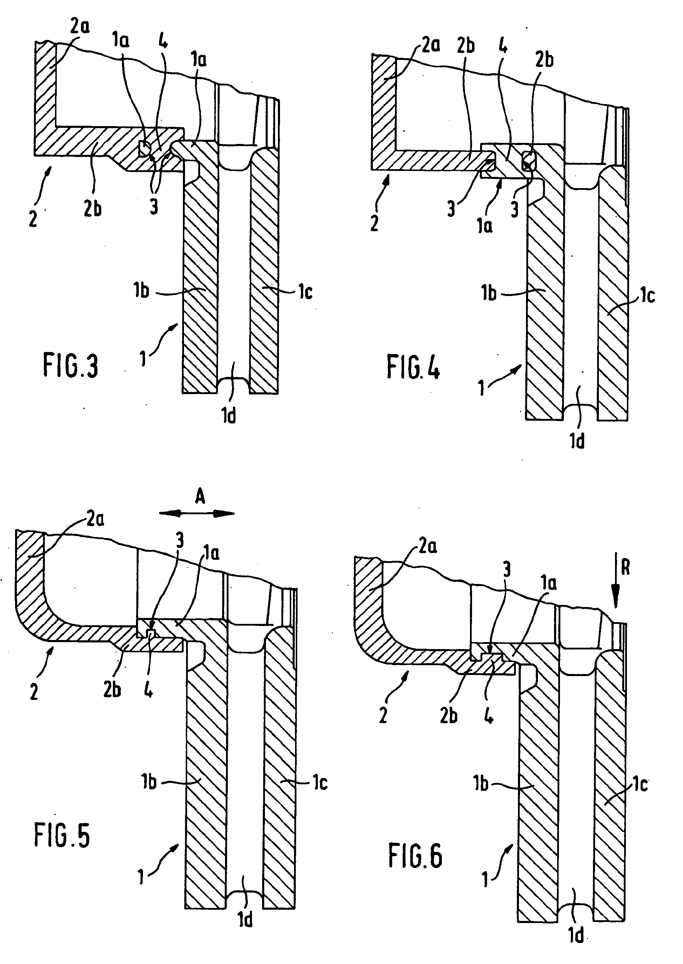

Beim Ausführungsbeispiel nach **Figur 3** sind (analog dem Beispiel nach den Figuren 2a - 2c) die als Durchbrüche ausgebildeten Aussparungen 3 im Reibringstummel 1a vorgesehen, und zwar abermals in mehrfacher Ausführung über dem Umfang des Reibringstummels 1a verteilt angeordnet. Dabei umschließt jedoch nun die Topfwand 2b den Reibringstummel 1a innenseitig und außenseitig, was so praktisch nur auf gießtechnischem Wege herstellbar ist, d.h. der Reibringstummel 1a wird von der Topfwand 2b innenseitig und außenseitig umgossen. Nachdem also wie ersichtlich die quasi geteilte Topfwand 2b sowohl am Innen-Umfang als auch am Außen-Umfang des Reibringstummels 1a anliegt, sind die Vorsprünge 4 quasi sowohl an der Außenseite des innenseitig am Reibringstummel 1a anliegenden Abschnittes der Topfwand 2b als auch an der Innenseite des außenseitig am Reibringstummel 1a anliegenden Abschnittes der Topfwand 2b vorgesehen. Nur der Vollständigkeit halber sei in diesem Zusammenhang erwähnt, dass die Durchbrüche bzw. Aussparungen 3 (und folglich auch die damit zusammenwirkenden Vorsprünge 4) von beliebiger Form sein können, d.h. einen beliebigen Querschnitt (bspw. kreisförmig, langlochförmig, rechteckig usw.) aufweisen können, was praktisch für alle gezeigten Ausführungsbeispiele gilt.

Quasi konträr zur letzterläuterten Variante ist das Ausführungsbeispiel nach **Figur 4** ausgebildet. Hier sind (analog dem Beispiel nach den Figuren 1a - 1c) die als Durchbrüche ausgebildeten Aussparungen 3 in der Topfwand 2b vorgesehen, und zwar abermals in mehrfacher Ausführung über deren Umfang verteilt angeordnet. Dabei umschließt jedoch nun der Reibringstummel 1a die Topfwand 2b innenseitig und außenseitig, was so praktisch nur auf gießtechnischem Wege herstellbar ist, d.h. die Topfwand 2b wird vom Reibringstummel 1a innenseitig und außenseitig umgossen oder es wird die Topfwand 2b zwischen den geeignet gestalteten, d.h. quasi gespaltenen Reibringstummel 1a eingegossen. Nachdem also wie ersichtlich der quasi geteilte Reibringstummel 1a sowohl am Innen-Umfang als auch am Außen-Umfang der Topfwand 2b anliegt, sind die Vorsprünge 4 quasi sowohl an der Außenseite des innenseitig an der Topfwand 2b anliegenden Abschnittes des Reibringstummels 1a der als auch an der Innenseite des außenseitig an der Topfwand 2b anliegenden Abschnittes des Reibringstummels 1a vorgesehen.

Beim Ausführungsbeispiel nach **Fig.5** ist der Bremsscheibentopf 2 insbesondere in Axialrichtung A der erfindungsgemäßen Bremsscheibe durch eine oder mehrere ringförmig umlaufende Rille(n) am Reibringstummel 1a gesichert, d.h. die erfindungsgemäße Aussparung 3 ist als Rille im ersten Verbindungselement 1a ausgebildet, während der damit zusammenwirkende stegartige ringförmig umlaufende Vorsprung 4 am Innen-Umfang des zweiten Verbindungselementes 2b, nämlich an der Innenseite der Topfwand 2b vorgesehen ist. Selbstverständlich ist auch eine quasi umgekehrte Ausbildung möglich, d.h. die umlaufende Rille bzw. Aussparung 3 kann in der Topfwand 2b und der umlaufende Steg bzw. Vorsprung 4 kann am Reibringstummel 1a vorgesehen sein. Daneben ist auch eine Kombination möglich, derart, dass an beiden Verbindungselementen 1a und 2b jeweils eine ringförmig umlaufende Aussparung 3 sowie ein ringförmig umlaufender Vorsprung 4 vorgesehen ist.

Noch auf **Figur 5** Bezug nehmend können zumindest zwei ringförmig umlaufende Rillen vorgesehen sein, die dabei zueinander nicht parallele Ebenen beschreiben. Eine derartige Gestaltung bietet eine optimale Verdrehsicherung zwischen dem Reibring 1 und dem Bremsscheibentopf 2. Selbstverständlich ist auch hier wieder eine Gestaltung möglich, wie sie in Verbindung mit den Figuren 1d und 1e erläutert wurde. Auch hier wirkt zwischen der Aussparung 3 und dem Vorsprung 4 ein Hinterschnitt (nicht gezeigt).

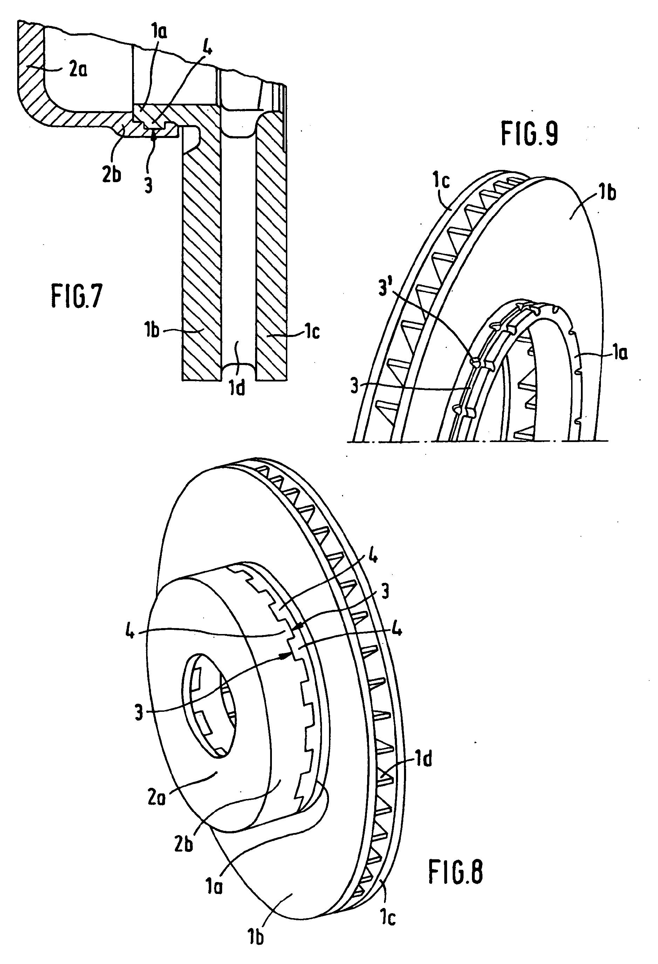

Neben einer oder mehreren ringförmig verlaufenden Rille(n) ist im übrigen auch eine gewellte, umlaufende Rille denkbar, wodurch eine axiale und radiale Sicherung erreicht wird. Ferner ist es möglich, eine oder mehrere umlaufende Rille(n) 3 mit radialen oder mit mehreren verteilt über dem Umfang angeordneten axialen Nuten 3' zu kombinieren, so wie dies in **Figur 9** dargestellt ist. Sowohl in die Rillen 3 als auch in die Nuten 3', die hier sämtlich am Reibringstummel 1a vorgesehen sind, greifen entsprechende Vorsprünge 4 des Bremsscheibentopfes 2 bzw. der Topfwand 2b hinein (in **Fig.9** nicht dargestellt).

In der Schnittdarstellung ähnlich der Figur 5 ist ein weiteres Ausführungsbeispiel nach **Figur 6**, wobei jedoch wieder mehrere Aussparungen 3, die als Taschen ausgebildet sind, über dem Umfang des Reibringstummels 1a verteilt angeordnet sind. Insofern besteht auch eine gewisse Ähnlichkeit zum Ausführungsbeispiel nach den Figuren 2a - 2c, nur dass hier in **Figur 6** die Aussparungen 3 nicht die Wand des betroffenen Verbindungselementes (hier des Verbindungselementes 1a) durchdringen, sondern lediglich Taschen bzw. Ausnehmungen bilden, die nach unten hin durch einen Boden begrenzt sind. Entsprechend angepasst sind selbstverständlich die ebenso wie die Aussparungen 3 in bzw. gegen Radialrichtung R orientierten Vorsprünge 4.

Selbstverständlich ist auch eine quasi umgekehrte Ausbildung entsprechend **Figur 7** möglich, d.h. die Aussparungen 3 können in der Topfwand 2b und die Vorsprünge 4 können am Reibringstummel 1a vorgesehen sein. Daneben ist auch eine Kombination möglich, derart, dass an beiden Verbindungselementen 1a und 2b jeweils Aussparungen 3 sowie Vorsprünge 4 vorgesehen sind. Dabei können die Vorsprünge 4 am jeweiligen Verbindungselement vorgegossen, plastisch umgeformt oder mechanisch herausgearbeitet sein. Im übrigen ist auch hier eine Gestaltung möglich, wie sie in Verbindung mit den Figuren 1d und 1e erläutert wurde. Ferner wirkt zwischen der Aussparung 3 und dem Vorsprung 4 ein Hinterschnitt (nicht gezeigt).

Beim Ausführungsbeispiel nach **Figur 8** sind abermals sog. Taschen als Aussparungen 3 vorgesehen, in die zugeordnete Vorsprünge 4 hineinragen, wobei letzteres in Axialrichtung der nur in 3-D-Darstellung gezeigten Bremsscheibe geschieht. Die beiden Verbindungselemente 1a und 2b sind somit nach Art einer Stirn-Klauen-Verzahnung miteinander verbunden. In Umfangsrichtung abwechselnd sind dabei sowohl aus der Topfwand 2b als auch aus dem Reibringstummel 1a jeweils stirnseitig Segmente herausgeschnitten, wodurch Taschen bzw. Aussparungen 3 gebildet werden, in die die dazwischenliegenden verbleibenden Wandabschnitte des jeweils anderen Verbindungselementes 1a bzw. 2b als Vorsprünge 4 hineinragen. Auch hierbei ist ein vorzugsweise in Axialrichtung der Bremsscheibe wirkender Hinterschnitt (nicht gezeigt) vorgesehen.

Wie bereits eingangs erläutert wurde, eignen sich die vorgeschlagenen Gestaltungen insbesondere für Bremsscheiben, deren Reibring(e) 1 aus einem anderen Material als der Bremsscheibentopf 2 bestehen. Während letzterer aus Leichtbaugründen in einer geeigneten Aluminiumlegierung ausgeführt sein kann, kann es sich beim Reibringmaterial bspw. um üblichen Grauguss handeln. Dabei sind die vorgeschlagenen formschlüssigen Verbindungen besonders effizient durch Eingießen bzw. Umgießen herstellbar, zumindest für einige kommt jedoch auch eine plastische Umformung in Frage. Stets erhält man mit (zumindest für eine Großserienfertigung) relativ geringem Fertigungsaufwand eine sichere Verbindung zwischen dem Reibring 1 und dem Bremsscheibentopf 2, wobei noch darauf hingewiesen sei, dass durchaus eine Vielzahl von Details insbesondere konstruktiver Art abweichend von den gezeigten Ausführungsbeispielen gestaltet sein kann, ohne den Inhalt der Patentansprüche zu verlassen.

## Patentansprüche

1. Verbundbremsscheibe für eine Fahrzeug-Scheibenbremse, deren aus einem ersten Material bestehender Reibring (1) oder Reibring-Paar abseits der Ebene des Reibringes oder Reibringpaares mit einem aus einem anderen Material bestehenden Bremsscheibentopf (2) verbunden ist, wozu ein vom Reibring (1) in Axialrichtung abragender Reibringstummel (1a) als erstes Verbindungselement vorgesehen ist, der/das formschlüssig mit der als zweites Verbindungselement fungierenden Topfwand (2b) des Bremsscheibentopfes (2) verbunden ist, wobei ohne Verwendung eines weiteren Bauelementes diese formschlüssige Verbindung durch eine oder mehrere Aussparungen (3) in einem der beiden Verbindungselemente (1a, 2b) gebildet ist, in die jeweils ein am anderen Verbindungselement (2b, 1a) vorgesehener Vorsprung (4) hineinragt
**dadurch gekennzeichnet, dass** die Vorsprünge (4) unter Hinterschnitt (5) in die Aussparungen (3) hineinragen und dass die formschlüssige Verbindung gießtechnisch oder durch plastische Verformung hergestellt ist.

2. Verbundbremsscheibe nach Anspruch 1,
**dadurch gekennzeichnet, dass** die Aussparungen (3) in Form mehrerer über dem Umfang eines oder beider Verbindungselemente (1a, 2b) verteilt angeordneter Taschen oder Durchbrüche ausgebildet sind.

3. Verbundbremsscheibe nach Anspruch 1,
**dadurch gekennzeichnet, dass** die Aussparungen (3) in Form zumindest einer umlaufenden Rille ausgebildet sind.

4. Verbundbremsscheibe nach Anspruch 3,
**dadurch gekennzeichnet, dass** zumindest zwei umlaufende Rillen vorgesehen sind, die zueinander nicht parallele Ebenen beschreiben.

5. Verbundbremsscheibe nach einem der vorangegangenen Ansprüche,
**dadurch gekennzeichnet, dass** die Topfwand (2b) außenseitig und/oder innenseitig am Reibringstummel (1a) oder der Reibringstummel (1a) außenseitig und/oder innenseitig an der Topfwand (2b) anliegt.

6. Verbundbremsscheibe nach einem der vorangegangenen Ansprüche,
**dadurch gekennzeichnet, dass** in der Topfwand (2b) weitere Schwächungen oder Durchbrechungen (6) abseits der formschlüssigen Verbindungen vorgesehen sind.

## Claims

1. An assembled brake disc for a vehicle disc brake, the friction ring (1) or friction ring pair of which, comprising of a first material, is connected away from the plane of the friction ring or pair of friction rings to a brake disc pot (2) comprising a different material, for which purpose a friction ring stub (1 a) projecting from the friction ring (1) in the axial direction is provided as the first connection element, and is positively connected to the pot wall (2b) of the brake disc pot (2) acting as the second connection element, wherein, without the use of a further construction element, this positive connection is formed by one or more recesses (3) in one of the two connection elements (1a, 2b), into which a projection (4) provided on the other connection element (2b, 1 a) projects in each case, **characterised in that** the projections (4) project with an undercut (5) into the recesses (3) and **in that** the positive connection is produced by casting or by plastic deformation.

2. An assembled brake disc according to claim 1, **characterised in that** the recesses (3) are configured in the form of a plurality of pockets or openings arranged distributed over the periphery of one or both connection elements (1a, 2b).

3. An assembled brake disc according to claim 1, **characterised in that** the recesses (3) are configured in the form of at least one peripheral groove.

4. An assembled brake disc according to claim 3, **characterised in that** at least two peripheral grooves are provided, which describe planes which are not parallel to one another.

5. An assembled brake disc according to any one of the preceding claims, **characterised in that** the pot wall (2b) rests on the outside and/or on the inside on the friction ring stub (1a) or the friction ring stub (1a) rests on the outside and/or on the inside on the pot wall (2b).

6. An assembled brake disc according to any one of the preceding claims, **characterised in that** further weakenings or openings (6) are provided away from the positive connections in the pot wall (2b).

## Revendications

1. Disque de frein assemblé pour un frein à disque de véhicule dont une bague de friction (1) ou une paire de bagues de friction constituées d'une premier matériau sont reliées en dehors du plan de la bague de friction ou de la paire de bague de friction avec une chambre de disque de frein (2) constituée d'un autre matériau, comme premier élément de liaison un segment de bague de friction (1a) dépassant dans le sens axial de la bague de friction (1) étant relié par complémentarité de forme avec la paroi (2b) de la chambre de disque de frein (2) faisant office de deuxième élément de liaison, et sans utiliser d'élément de construction supplémentaire, cette liaison par complémentarité de forme étant établie par une ou plusieurs cavités (3) dans l'un des deux éléments de liaison (1a, 2b), dans chacune desquelles pénètre un élément saillant (4) prévu sur l'autre élément de liaison (2b, 1a),
**caractérisé en ce que**
les éléments saillants (4) pénètrent dans les cavités (3) sous une contre-dépouille (5) et la liaison par complémentarité de forme est obtenue par moulage ou par formage plastique.

2. Disque de frein assemblé selon la revendication 1,
**caractérisé en ce que**
les cavités (3) forment plusieurs poches ou ouvertures réparties sur la périphérie d'un ou des deux éléments de liaison (1a, 2b).

3. Disque de frein assemblé selon la revendication 1,
**caractérisé en ce que**
les cavités (3) forment au moins une gorge périphérique.

4. Disque de frein assemblé selon la revendication 3,
**caractérisé en ce qu'**
au moins deux gorges périphériques décrivent des plans non parallèles entre elles.

5. Disque de frein assemblé selon l'une des revendications précédentes,
**caractérisé en ce que**
la paroi de chambre (2b) repose du côté extérieur et/ou du côté intérieur contre le segment de bague de friction (1a) ou le segment de bague de friction (1a) du côté extérieur et/ou du côté intérieur contre la paroi de chambre (2b).

6. Disque de frein assemblé selon l'une des revendications précédentes,
**caractérisé en ce qu'**
il est prévu dans la paroi de chambre (2b) d'autres affaiblissements ou ouvertures (6) en dehors des liaisons par complémentarité de forme.
